# EUROPEAN PATENT SPECIFICATION

(11) **EP 2 438 334 B1**
(45) Date of publication and mention of the grant of the patent: **01.03.2017**
(21) Application number: 10728304.6
(22) Date of filing: 28.05.2010
(51) Int. Cl.: F16K 11/24, F16K 27/00

(54) **A SOLENOID VALVE ASSEMBLY, PARTICULARLY FOR A CLOTHES WASHING MACHINE**
MAGNETVENTILANORDNUNG, INSBESONDERE FÜR EINE WASCHMASCHINE
ENSEMBLE D'ELECTROVANNES, EN PARTICULIER POUR UNE MACHINE A LAVER

(30) Priority: 01.06.2009 IT TO20090415
(43) Date of publication of application: 11.04.2012
(73) Proprietor: ELBI International S.p.A., 10129 Torino (IT); BSH Hausgeräte GmbH, 81739 München (DE)
(72) Inventor: DA PONT, Paolo, I-10123 Torino (IT); RENDESI, Maurizio, I-10090 VILLARBASSE (Torino) (IT); MOLINO, Giorgio, I-10040 GIVOLETTO (Torino) (IT); CARRER, Giorgio, I-10141 Torino (IT); BOLDUAN, Edwin, D-13629 Berlin (DE); LEWY, Grzegorz, D-10557 Berlin (DE); AURICH, Dirk, D-12437 Berlin (DE)
(74) Representative: Quinterno, Giuseppe
(86) International application number: PCT/IB2010/052390
(87) International publication number: WO 2010/140096

(56) References cited:
- DE-A1- 19 747 142
- US-A- 4 290 450
- US-A- 5 449 019
- US-A- 5 895 027
- US-A1- 2007 289 646
- US-A1- 2007 289 647

## Description

The present invention relates to a solenoid valve assembly for the supply of hot and/or cold water, particularly for a washing machine, such as a clothes washing machine.

US 2007/289646 A1 and US 2007/289647 A1 disclose a solenoid valve assembly of this type, comprising a one-piece plastic injection moulding incorporating first and second shut-off solenoid valves for controlling the supply of hot water and cold water, respectively, which have a common one-piece body with two tubular inlet ducts and a single, common outlet manifold. Said solenoid valves have a respective control winding extending from said body in a direction which is essentially orthogonal to the respective inlet duct and provided with electrical connection terminals which extend parallel with one another. Said solenoid valves are arranged in a side-by-side arrangement, with the inlet ducts parallel with one another and with their respective windings also parallel with one another. A connecting structure with an essentially plate-like body made of an electrically insulating material, carries a plurality of electrical conductors coupled to an electrical connector portion integrally formed with said connecting structure, and the terminals of said windings are connected to said conductors of the connecting structure. Making such solenoid valve assemblies is complicated and requires the use of complex and expensive moulds.

It is an object of the present invention to provide an improved solenoid valve assembly of the type specified above, which works reliably and has a relatively simple structure that can be assembled quickly and easily.

This and other objects are achieved according to the invention with a solenoid valve assembly having the features defined in claim 1.

In a solenoid valve assembly according to the present invention it is possible to use two solenoid valves of a type known per se, and which can therefore be produced using standard tooling which is essentially already available. These solenoid valves are combined together quickly and simply to form the solenoid valve assembly, with a substantial reduction in costs.

Other features and advantages of the invention will be made clear by the following detailed description given purely by way of non-limiting example, with reference to the appended drawings, in which:
Figure 1 is a front perspective view of a solenoid valve supply assembly according to the present invention;
Figure 2 is a rear perspective view of the solenoid valve assembly of Figure 1;
Figures 3 and 4 are exploded perspective views of the solenoid valve assembly of the previous figures;
Figures 5 and 6 are perspective views showing two solenoid valves incorporated in the solenoid valve assembly of the previous figures;
Figure 7 is a bottom view of the two solenoid valves shown in Figures 5 and 6; and
Figures 8 to 10 are partial perspective views showing a variant of the connection between the aforementioned two solenoid valves.

In the drawings, reference 1 is a general indication for a solenoid valve supply assembly according to the present invention.

In the embodiment illustrated by way of example, the solenoid valve assembly 1 comprises a first solenoid valve 2 and a second solenoid valve 3 for controlling the supply of hot and cold water, respectively.

These solenoid valves 2 and 3 are shut-off (or "on/off') valves. Their structure is known per se and they are made separately and independently of each other. They have respective bodies 2a, 3a, which may for example be plastic mouldings, with a tubular inlet duct 2b, 3b which in the example illustrated is provided with an externally threaded port 2c, 3c for connection to respective sources (not shown) of hot and cold water.

In the example shown in the drawings, the solenoid valve 2 has a single outlet port 2d, whereas the solenoid valve 3 has two outlet ports 3d, 3e.

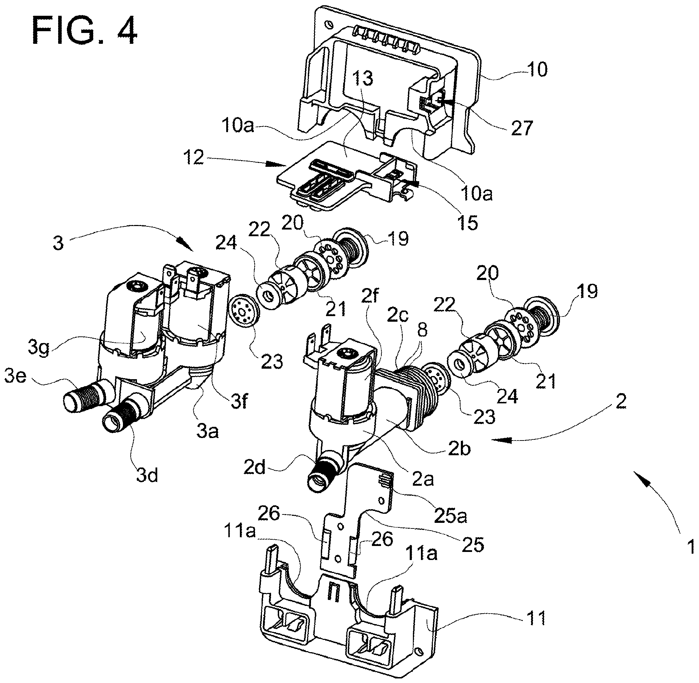

The solenoid valve 2 therefore has a single control winding 2f, whereas the solenoid valve 3 has two, 3f and 3g, for selectively controlling the flow of cold water from the inlet duct 3c to one or the other of its outlet ports 3d, 3e (see in particular Figures 4 to 6).

The windings 2f and 3f, 3g extend from the bodies 2a, 3a of the respective solenoid valves in directions essentially orthogonal to the respective inlet ducts 2b, 3b.

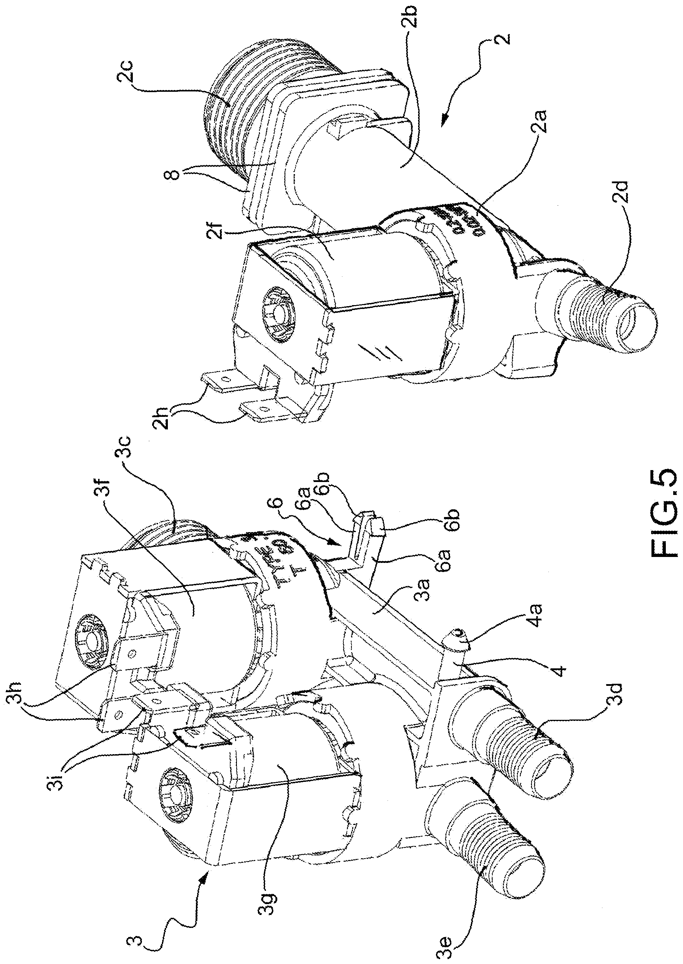

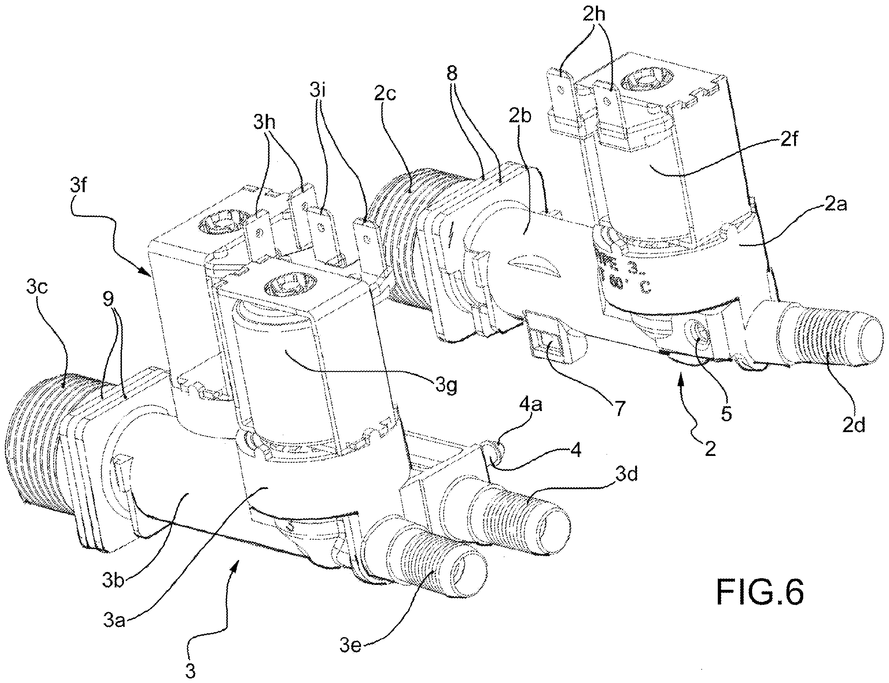

As seen particularly in Figures 5 and 6, said windings have respective pairs of terminals 2h, 3h and 3i that extend upwards, parallel with each other, from the distal ends of these windings.

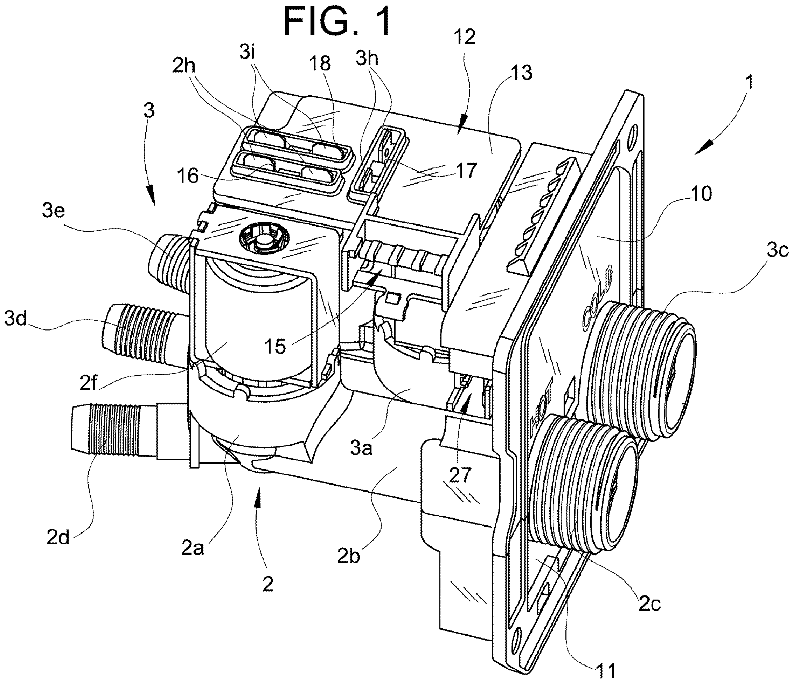

The solenoid valves 2 and 3 are arranged with their bodies 2a, 3a interconnected in a side-by-side arrangement, with their respective inlet ducts 2b, 3b parallel with one anther. In the embodiment shown in Figures 1 to 7 these valve bodies 2a, 3a are interconnected in a manner which will now be described with reference to Figures 5 and 6.

On the side of the body 3a of the solenoid valve 3 nearest the other solenoid valve 2 is a transverse cylindrical rod 4 with a terminal conical head 4a (Figures 5 and 6) which fits into a corresponding retaining seat 5 (Figure 6) in the body 2a of the solenoid valve 2, and a square rod 6 split longitudinally to form two half-arms 6a with respective half-pyramidal terminal heads 6b (Figure 5), which fit into a seat 7 in the solenoid valve 2 (Figure 6).

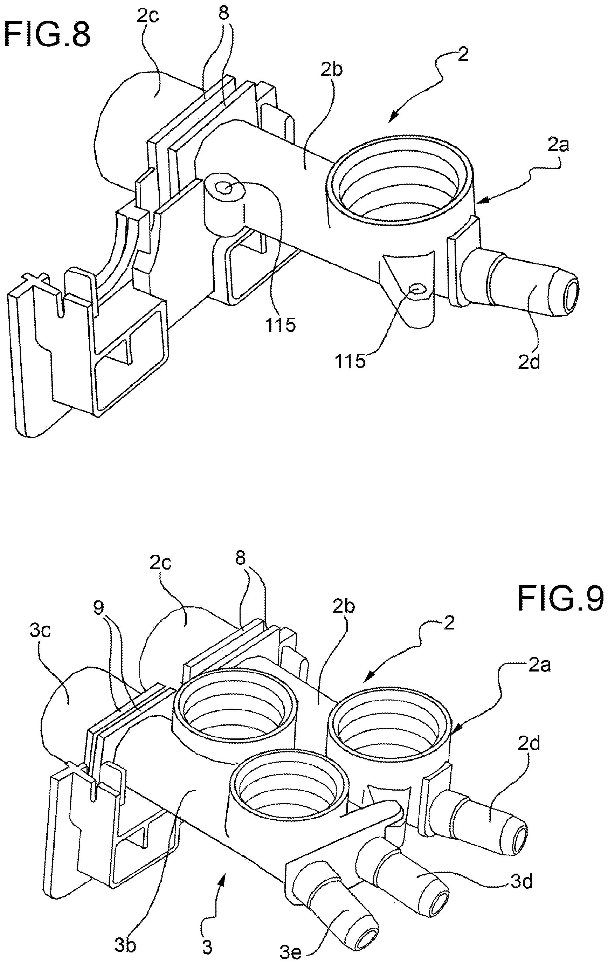

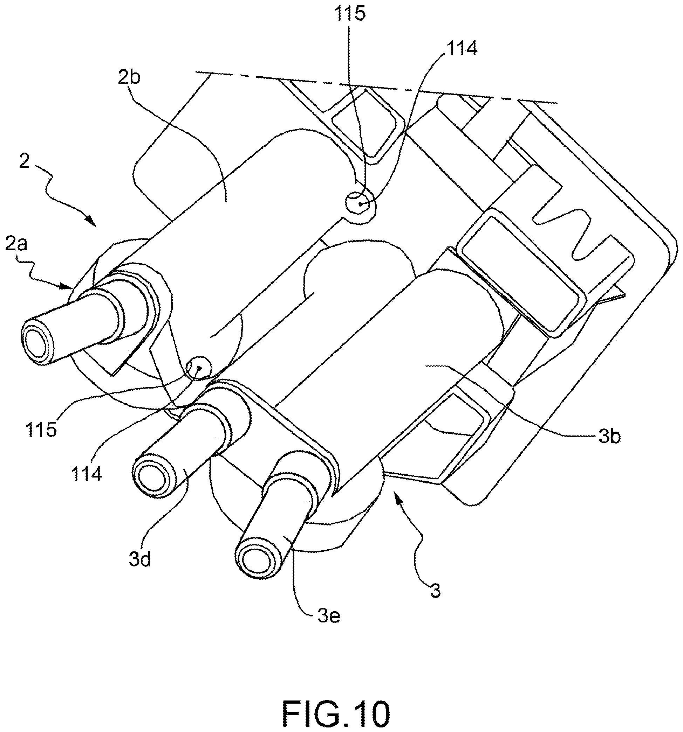

In a variant illustrated (partially) in Figures 8 to 10, the body of one of the two solenoid valves (such as solenoid valve 2) contains a plurality of through guides or holes 115, in which corresponding pins 114 in the body of the other valve fit, their distal ends protruding beyond said guides or holes 115 and therefore being hot upset to stabilize the connection.

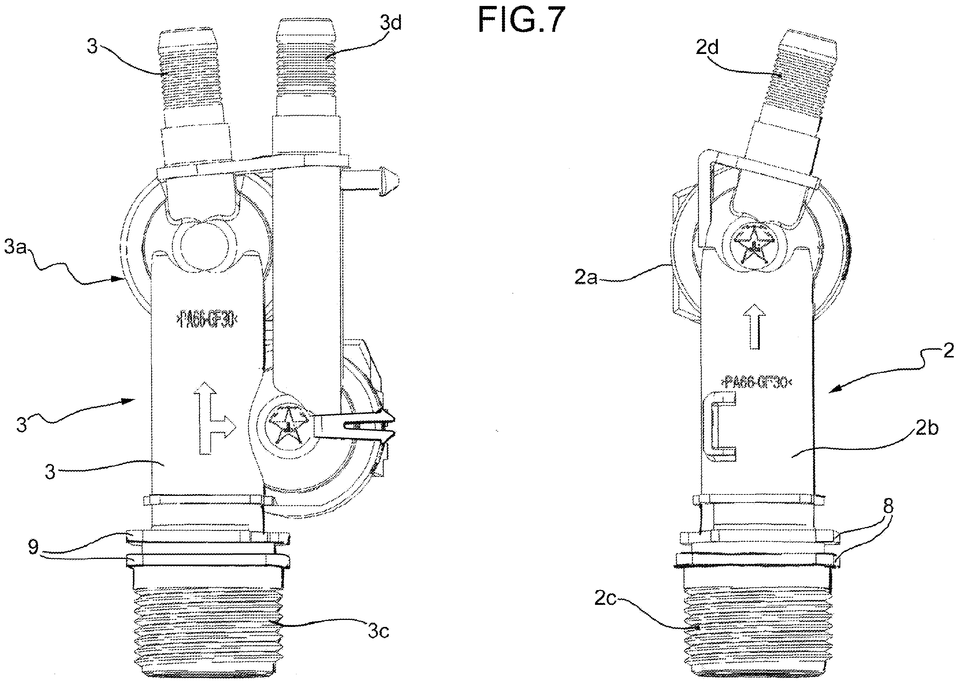

The inlet ducts 2b, 3b of the two solenoid valves adjacent to the respective ports 2c, 3c have respective pairs of transversely projecting parallel flanges 8 and 9 of essentially quadrilateral shape (Figures 6 and 7).

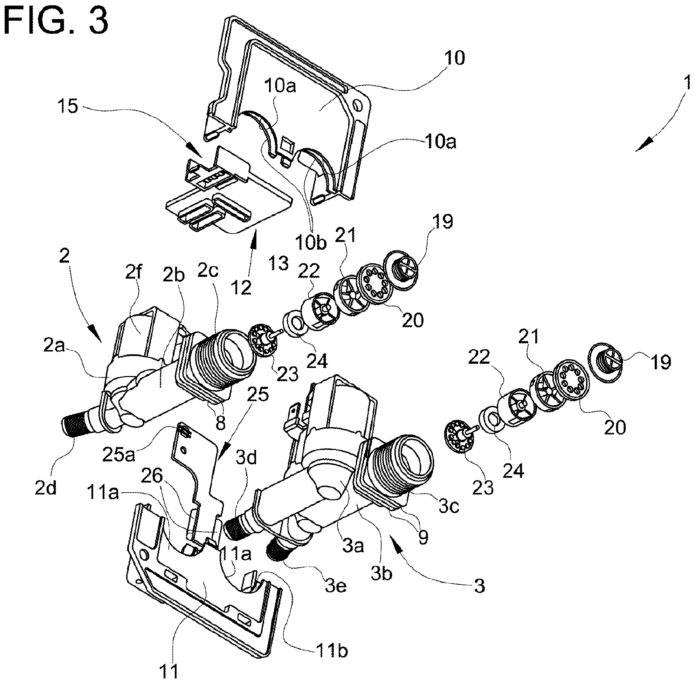

Assembly of the solenoid valves 2 and 3 is completed and stabilized by means of two half-brackets 10 and 11, the former above and the latter below (Figures 1 to 4). These half-brackets have respective essentially semicircular cut-outs 10a and 11a which when combined together define two circular apertures or passages through which the inlet ducts of the two solenoid valves 2 and 3 pass. As can be made out in Figure 3 in particular, in the cut-outs 10a, 11a the half-brackets 10 and 11 form respective seats 10b, 11b, in each of which a corresponding flange 8, 9 of the solenoid valves 2 and 3 fits and is firmly held.

The half-brackets 10 and 11 are joined together firmly by known methods, such as snap-action coupling and retention devices.

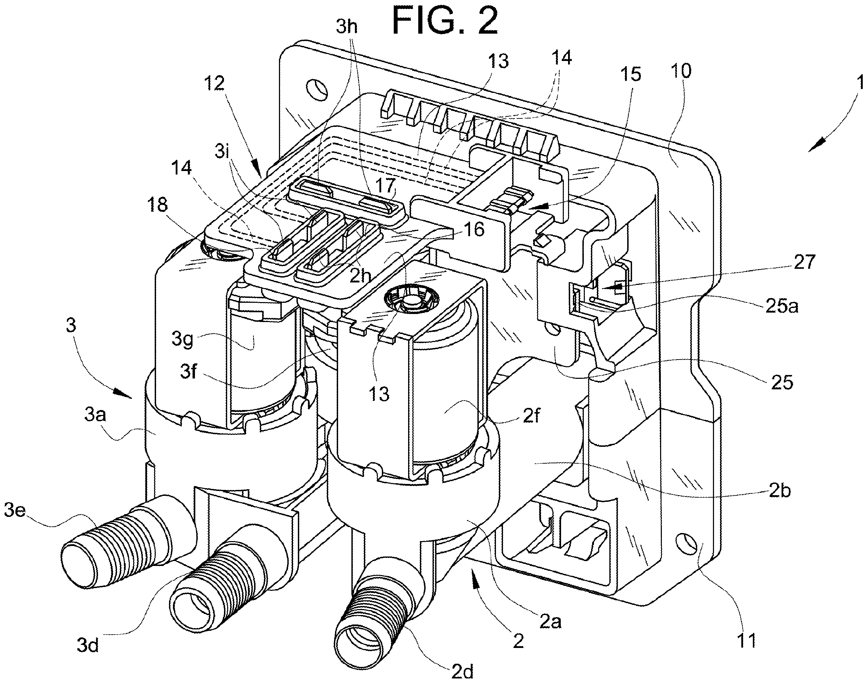

In Figures 1 to 4, reference 12 is a general indication for an electrical connecting structure comprising a plate-like body 13 of electrically insulating material in which electrical conductors are embedded, some of which are shown in broken lines marked 14 in Figure 2. These conductors are coupled to an electrical connector portion 15, formed integrally with the plate-like body 13, for connection to a control unit for controlling the machine containing the solenoid valve assembly 1.

The body 13 of the connecting structure 12 forms a plurality of seats 16-18 (Figures 1 and 2) containing exposed portions of the conductors 14. The terminals 2h, 3h and 3i of the control windings 2f, 3f and 3g are inserted into these to connect them to said conductors.

In the assembled condition the connecting structure 12 extends parallel to the inlet ducts of the two solenoid valves 2, 3 adjacent to the distal ends of the windings 2f, 3f and 3g.

Conveniently, as shown in Figures 3 and 4, various auxiliary devices, known per se, are mounted in the inlet ducts 2b, 3b of the solenoid valves 2 and 3; in particular:
- inlet filters 19,
- flow stabilizers 20,
- flow diffusers 21,
- rotors with angled blades (turbines) 22 with permanent magnets at their respective peripheries,
- flow regulators comprising a shaped disc 23 to which a flexible ring 24 is connected.

Reference 25 in Figures 2-4 indicates a printed circuit board (PCB) carrying a pair of devices which, in combination with the magnets of the rotors or turbines 22, are capable of detecting the respective speeds of rotation of these rotors. These speeds are indicative of the (total) flow rates of hot and cold water through the solenoid valve assembly 1.

In the illustrated embodiment, said devices are reed relays 26 (Figures 3 and 4) arranged in positions such that when operating they are sensitive to the field generated by the magnets associated with the corresponding rotors 22. Alternatively, these devices may for example be Hall-effect sensors.

The plate 25 is fixed for example to the lower half-bracket 11, and an upper portion 25a of this half-bracket fits into a socket formation 27 for an electrical connector formed integrally with the upper half-bracket 10 (Figure 1, 2 and 4), for connection to a control unit belonging to the machine.

Clearly, without modifying the principle of the invention, the embodiments and details of construction can be varied significantly compared with those described and illustrated purely by way of non-limiting example, without thereby departing from the scope of the invention as defined in the accompanying claims.

Thus, for example, for the assembly and stabilization of the two solenoid valves 2 and 3, a single bracket rather than two half-brackets may be used, and said solenoid valves may have a different number of outlet ports from the number shown in the example illustrated in the drawings and described above, optionally oriented in different directions to those illustrated. In addition, the control windings of the solenoid valves may be aligned with each other, and the connecting structure 12 may then be arranged in a plane essentially orthogonal to the inlet ducts of the solenoid valves.

## Claims

1. A solenoid valve assembly (1) for the controlled supply of hot and/or cold water, particularly for a clothes washing machine, comprising
- first and second separately made shut-off solenoid valves (2; 3) for controlling the supply of hot water and cold water, respectively, which are separate from one another and having each a respective body (2a; 3a) with a tubular inlet duct (2b; 3b) and, on an essentially opposite side, at least one respective outlet port (2d; 3d, 3e), and with at least one respective control winding (2f; 3f, 3g) extending from said body (2a; 3 a) in a direction which is essentially orthogonal to the respective inlet duct (2b; 3b) and provided with electrical connection terminals (2h; 3h, 3i) which extend parallel with one another;
said solenoid valves (2, 3) being arranged with their respective bodies (2a; 3a) interconnected in a side-by-side arrangement, with their inlet ducts (2b; 3b) parallel with one another and with their respective windings (2f; 3f, 3g) also parallel with one another; and
- one connecting structure (12) including an essentially plate-like body (13) made of an electrically insulating material, carrying a plurality of electrical conductors (14) coupled to an electrical connector portion (15) integrally formed with said connecting structure (12);
the terminals of said windings (2f; 3f, 3g) being connected to said conductors (14) of the connecting structure (12).

2. A solenoid valve assembly according to claim 1, wherein said electrical connection terminals (2h; 3h, 3i) extend from the distal ends of their respective windings (2f; 3f, 3g), and said connecting structure (12) extends essentially parallel with the inlet ducts (2b, 3b) of said solenoid valves (2, 3), adjacent the distal ends of the control windings (2f; 3f, 3g) thereof.

3. A solenoid valve assembly according to claim 1 or claim 2, wherein the solenoid valve (3) for the supply of cold water has at least two outlet ports (3d, 3e) and two control windings (3f, 3g) for selectively controlling the communication between the inlet duct (3b) and one or the other of said outlet ports (3d, 3e).

4. A solenoid valve assembly according to one of the preceding claims, wherein the bodies (2a, 3a) of said solenoid valves (2, 3) are provided with respective coupling and mutual locking members (14, 15; 114, 115).

5. A solenoid valve assembly according to one of the preceding claims, wherein the bodies (2a, 3a) of said solenoid valves (2, 3) are connected and locked to one another by retaining means (8, 9, 10, 11, 10b, 11b) associated with the inlet ducts (2b, 3b) thereof.

6. A solenoid valve assembly according to claim 5, wherein said retaining means comprise flanges (8, 9) on the inlet ducts (2b, 3b) and two mutually coupled locking half-brackets (10, 11).

7. A solenoid valve assembly according to one of the preceding claims, wherein said solenoid valves (2, 3) are provided with flow rate detecting devices (22), and the assembly (1) comprises further a printed circuit board (25) carrying sensor devices (26) operatively coupled to said flow rate detecting devices (22).

8. A solenoid valve assembly according to claim 7, wherein said printed circuit board (25) is connected to an electric connector member (27) integrally formed with one of said half-brackets (10, 11).

## Patentansprüche

1. Magnetventilanordnung (1) für die gesteuerte Zufuhr von heißem und/oder kaltem Wasser, insbesondere für eine Waschmaschine für Kleidung, mit:
- einem ersten und einem zweiten separat hergestellten Absperrmagnetventil (2; 3) zum Steuern der Zufuhr von heißem Wasser bzw. kaltem Wasser, die voneinander getrennt sind und jeweils einen entsprechenden Körper (2a; 3a) aufweisen mit einer rohrförmigen Einlassleitung (2b; 3b) und auf einer im Wesentlichen gegenüberliegenden Seite wenigstens einer entsprechenden Auslassöffnung (2d; 3d, 3e) und mit wenigstens einer entsprechenden Steuerwicklung (2f; 3f, 3g), die sich von dem Körper (2a; 3a) in einer Richtung erstreckt, die im Wesentlichen orthogonal zu der entsprechenden Einlassleitung (2b; 3b) ist und mit elektrischen Verbindungsanschlüssen (2h; 3h, 3i) versehen ist, die sich parallel zueinander erstrecken;
wobei die Magnetventile (2, 3) mit ihren entsprechenden Körpern (2a; 3a), die in einer Seite-an-Seite-Anordnung untereinander verbunden sind, mit ihren Einlassleitungen (2b; 3b) parallel zueinander und mit ihren entsprechenden Wicklungen (2f; 3f, 3g) auch parallel zueinander angeordnet sind; und
- einer Verbindungsstruktur (12), die einen im Wesentlichen plattenförmigen Körper (13) aufweist, der aus einem elektrisch isolierenden Material hergestellt ist, der eine Vielzahl von elektrischen Leitern (14) trägt, die an einen elektrischen Anschlussbereich (15) gekoppelt sind, der integral mit der Verbindungsstruktur (12) ausgebildet ist;
wobei die Anschlüsse der Wicklungen (2f; 3f, 3g) mit den Leitern (14) der Verbindungsstruktur (12) verbunden sind.

2. Magnetventilanordnung nach Anspruch 1, wobei die elektrischen Verbindungsanschlüsse (2h; 3h, 3i) sich von den entfernten Enden ihrer entsprechenden Wicklungen (2f; 3f, 3g) erstrecken, und die Verbindungsstruktur (12) sich im Wesentlichen parallel zu den Einlassleitungen (2b, 3b) der Magnetventile (2, 3) erstreckt, benachbart der entfernten Enden der Steuerwicklungen (2f; 3f, 3g) davon.

3. Magnetventilanordnung nach Anspruch 1 oder Anspruch 2, wobei das Magnetventil (3) für die Zufuhr von kaltem Wasser wenigstens zwei Auslassöffnungen (3d, 3e) und zwei Steuerwicklungen (3f, 3g) zum gezielten Steuern der Verbindung zwischen der Einlassleitung (3b) und einer oder der anderen der Auslassöffnungen (3d, 3e) aufweist.

4. Magnetventilanordnung nach einem der vorhergehenden Ansprüche, wobei die Körper (2a, 3a) der Magnetventile (2, 3) mit entsprechenden Kupplungs- und wechselseitigen Verschlusselementen (14, 15; 114, 115) versehen sind.

5. Magnetventilanordnung nach einem der vorhergehenden Ansprüche, wobei die Körper (2a, 3a) der Magnetventile (2, 3) verbunden sind und miteinander durch Haltemittel (8, 9, 10, 11, 10b, 11b), die den Einlassleitungen (2b, 3b) davon zugeordnet sind, verklemmt sind.

6. Magnetventilanordnung nach Anspruch 5, wobei die Haltemittel Flansche (8, 9) auf den Einlassleitungen (2b, 3b) aufweisen und zwei gegenseitig gekoppelte Verschlusshalbkonsolen (10, 11).

7. Magnetventilanordnung nach einem der vorhergehenden Ansprüche, wobei die Magnetventile (2, 3) mit Durchflussermittlungseinrichtungen (22) versehen sind, und die Anordnung (1) ferner eine Leiterplatine (25) aufweist, die Sensoreinrichtungen (26) trägt, die betriebsbereit mit den Durchflussermittlungseinrichtungen (22) gekoppelt sind.

8. Magnetventilanordnung nach Anspruch 7, wobei die Leiterplatte (25) mit einem elektrischen Verbindungselement (27) verbunden ist, das integral mit einer der Halbkonsolen (10, 11) ausgebildet ist.

## Revendications

1. Ensemble d'électrovannes (1) pour l'alimentation contrôlée en eau chaude et/ou froide, en particulier pour une machine à laver le linge, comprenant
- des première et seconde électrovannes de coupure (2 ; 3) réalisées séparément, pour commander l'alimentation respectivement en eau chaude et en eau froide, qui sont séparées l'une de l'autre et comprenant chacune un corps (2a ; 3a) respectif avec une canalisation d'entrée tubulaire (2b ; 3b) et, sur un côté essentiellement opposé, au moins un port de sortie (2d ; 3d ; 3e) respectif, et avec au moins un enroulement de commande (2f ; 3f ; 3g) respectif s'étendant à partir dudit corps (2a ; 3a) dans une direction qui est essentiellement orthogonale à la canalisation d'entrée (2b ; 3b) respective et dotée de bornes de connexion électrique (2h ; 3h ; 3i) qui s'étendent parallèlement l'une par rapport à l'autre ;
lesdites électrovannes (2, 3) étant agencées avec leurs corps (2a ; 3a) respectifs interconnectés selon un agencement côte à côte, avec leurs canalisations d'entrée (2b ; 3b) parallèles l'une à l'autre et avec leurs enroulements respectifs (2f ; 3f ; 3g) également parallèles l'un à l'autre ; et
- une structure de connexion (12) comprenant un corps (13) sensiblement en forme de plaque formé d'un matériau électriquement isolant, supportant une pluralité de conducteurs électriques (14) couplés à une partie de connecteur électrique (15) formée d'une seule pièce avec ladite structure de connexion (12) ;
les bornes desdits enroulements (2f ; 3f ; 3g) étant connectées auxdits conducteurs (14) de la structure de connexion (12).

2. Ensemble d'électrovannes selon la revendication 1, dans lequel lesdites bornes de connexion électrique (2h ; 3h ; 3i) s'étendent à partir des extrémités distales de leurs enroulements respectifs (2f ; 3f ; 3g), et ladite structure de connexion (12) s'étend essentiellement parallèlement aux canalisations d'entrée (2b, 3b) desdites électrovannes (2, 3), adjacente aux extrémités distales des enroulements de commande (2f ; 3f ; 3g) de celles-ci.

3. Ensemble d'électrovannes selon la revendication 1 ou la revendication 2, dans lequel l'électrovanne (3) pour l'alimentation en eau froide comprend au moins deux ports de sortie (3d, 3e) et deux enroulements de commande (3f, 3g) pour commander sélectivement la communication entre la canalisation d'entrée (3b) et l'un ou l'autre desdits ports de sortie (3d, 3e).

4. Ensemble d'électrovannes selon l'une des revendications précédentes, dans lequel les corps (2a, 3a) desdites électrovannes (2, 3) sont dotés d'éléments de couplage et de verrouillage mutuel (14, 15 ; 114, 115) respectifs.

5. Ensemble d'électrovannes selon l'une des revendications précédentes, dans lequel les corps (2a, 3a) desdites électrovannes (2, 3) sont connectés et verrouillés l'un à l'autre par des moyens de retenue (8, 9, 10, 11, 10b, 11b) associés aux canalisations d'entrée (2b, 3b) de celles-ci.

6. Ensemble d'électrovannes selon la revendication 5, dans lequel lesdits moyens de retenue comprennent des brides (8, 9) sur les canalisations d'entrée (2b, 3b) et deux demi-supports (10, 11) de verrouillage mutuellement couplés.

7. Ensemble d'électrovannes selon l'une des revendications précédentes, dans lequel lesdites électrovannes (2, 3) sont dotées de dispositifs de détection de débit (22), et l'ensemble (1) comprend en outre une carte de circuit imprimé (25) supportant des dispositifs de capteur (26) fonctionnellement couplés auxdits dispositifs de détection de débit (22).

8. Ensemble d'électrovannes selon la revendication 7, dans lequel ladite carte de circuit imprimé (25) est connectée à un élément de connecteur électrique (27) formé d'une seule pièce avec l'un desdits demi-supports (10, 11).
